# EUROPÄISCHE PATENTSCHRIFT

(11) **EP 0 969 930 B1**
(45) Veröffentlichungstag und Bekanntmachung des Hinweises auf die Patenterteilung: **23.10.2002**
(21) Anmeldenummer: 98906908.3
(22) Anmeldetag: 03.02.1998
(51) Int. Cl.: B01J 35/04

(54) **VORRICHTUNG UMFASSEND EIN GEHÄUSE UND EINEN WABENKÖRPER MIT ABGEFLACHTEM QUERSCHNITTSBEREICH**
APPARATUS COMPRISING A HOUSING AND A HONEYCOMB BODY WITH FLATTENED CROSS-SECTIONAL AREA
DISPOSITIF COMPRENANT UN BOITIER ET UN CORPS EN NID-D'ABEILLES A ZONE DE SECTION TRANSVERSALE APLATIE

(30) Priorität: 07.02.1997 DE 19704690
(43) Veröffentlichungstag der Anmeldung: 12.01.2000
(73) Patentinhaber: Emitec Gesellschaft für Emissionstechnologie mbH, 53797 Lohmar (DE)
(72) Erfinder: MAUS, Wolfgang, D-51429 Bergish Gladbach (DE); BRÜCK, Rolf, D-51429 Bergisch Gladbach (DE)
(74) Vertreter: Kahlhöfer, Hermann, Dipl.-Phys.
(86) Internationale Anmeldenummer: EP9800571
(87) Internationale Veröffentlichungsnummer: WO98034727

(56) Entgegenhaltungen:
- EP-A- 0 635 627
- DE-A- 4 243 079
- DE-C- 3 622 115
- DE-U- 8 521 814

## Beschreibung

Die vorliegende Erfindung schafft eine Vorrichtung umfassend ein Gehäuse sowie einen Wabenkörper mit einer Oberseite, einer Unterseite, einer ersten und einer zweiten Stirnseite sowie zwei seitlichen Randbereichen, wobei der Wabenkörper einen abgeflachten Querschnittsbereich und gewundene Blechlagen aufweist. Diese sind vorzugsweise schon mit katalytisch aktivem Material beschichtet. Zumindest ein Teil der Blechlagen ist strukturiert. Das Gehäuse ist dabei bevorzugt ein Schalldämpfter eines Abgassystems eines Verbremmungsmotors.

Wabenkörper, die eine Vielzahl von mit einem Fluid durchströmbare Kanäle aufweisen und von einem metallischen Mantelrohr umgeben sind, sind beispielsweise aus der EP 0 049 489, der EP 0 121 174, der EP 0 121 175, der EP 0 245 737 oder der EP 0 245 738 bekannt. Diese zeigen unterschiedliche Grundformen von Katalysator-Trägerkörpern, die vorzugsweise in Abgassystemen von Kraftfahrzeugverbrennungsmotoren eingesetzt werden.

Bei Kleinmotoren, Motoren mit einem Hubraum von weniger als 250 ccm, insbesondere weniger als 50 ccm, beispielsweise bei Motorsägen, Rasenmähern oder dergleichen, werden vor allem Wabenkörper eingesetzt, die kleine Dimensionen zur Abgasreinigung aufweisen. Aus Platzgründen müssen bei derartigen Anordnungen die Wabenkörper oft in einer Trennwand in einer topfförmigen Erweiterung des Abgassystemes angeordnet werden, wobei die topfförmige Erweiterung gleichzeitig eine schalldämpfende Funktion hat.

Solches ist beispielsweise aus der DE 38 29 668 oder der US 3 597 165 bekannt. Auch die EP 0 470 113 beschreibt einen Wabenkörper, der in einer etwa senkrecht zur Durchströmungsrichtung verlaufenden Trennwand eingesetzt ist. Dort offenbarte Merkmale für Kleinmotoren sind auch bei dieser Erfindung verwendbar.

Aufgabe der vorliegenden Erfindung ist es, eine Vorrichtung umfassend ein Gehäuse mit einem Wabenkörper zu schaffen, die aufgrund ihres Aufbaus eine besondere Stabilität der Blechlagen des Wabenkörpers zueinander hat.

Diese Aufgabe wird durch eine Vorrichtung mit den Merkmalen des Anspruches 1, gelöst. Vorteilhafte Weiterbildungen sind in den abhängigen Ansprüchen angegeben.

Die erfindungsgemäße Vorrichtung umfaßt ein Gehäuse mit einer Oberschale und einer unterschale, die einen Hohlraum ausbilden, sowie einen Wabenkörper.

Der Wabenkörper mit einer Oberseite, einer Unterseite, einer ersten und einer zweiten Stirnseite sowie einem ersten seitlichen Randbereich und einem zweiten seitlichen Randbereich weist einen abgeflachten Querschnittsbereich sowie gewundene Blechlagen auf. Von den Blechlagen ist zumindest ein Teil strukturiert, wobei die gewundenen Blechlagen vorzugsweise schon mit katalytisch aktivem Material beschichtet sind. Alle Blechlagen haben eine erste gemeinsame Fixierungszone, die in dem ersten seitlichen Randbereich angeordnet ist. Anders als bei runden Wabenkörpern, die beispielsweise Querstreben im Wabenkörper haben, ist dieser Wabenkörper abgeflacht, was diesem von sich aus schon einmal eine besondere Stabilität zuordnet. Zum anderen ermöglicht der abgeflachte Querschnittsbereich, daß alle Blechlagen durch Ausbildung der Fixierungszone in dem seitlichen Randbereich am sogenannten "Teleskopieren" gehindert werden. Gerade bei länger andauernden, auftretenden Schwingungen an einem Wabenkörper besteht bei diesem die Gefahr, daß einzelne Lagen sich lösen und an den Stirnseiten des Wabenkörpers hervortreten. Durch Ausbildung der gemeinsamen Fixierungszone wird dieses jedoch verhindert. Weiterhin bildet die Fixierungszone einen Ort besonderer Stabilität für den gesamten Wabenkörper aus.

Eine kompakte, stabile und gleichzeitig besonders robuste Vorrichtung wird dadurch erreicht, daß das Gehäuse eine Aufnahme für eine Wand hat, die den Hohlraum in zwei Bereiche trennt. Um diese trennende Wand ist nun der Wabenkörper so angeordnet, daß die Wand über die Stirnseiten hinausragt. Die Vorrichtung kann alle weiter unten beschriebenen Merkmale aufweisen. Das Gehäuse kann daher ein Schalldämpfer sein, genauso aber auch Bestandteil einer chemischen oder sonstigen Anlage bei der eine derartige Konstruktion benötigt wird. Der Wabenkörper wird bevorzugt durch zumindest eine erste und eine zweite gemeinsame Fixierungszone erreicht, wobei die erste gemeinsame Fixierungszone in dem ersten seitlichen Randbereich und die zweite gemeinsame Fixierungszone in dem zweiten Randbereich des Wabenkörpers angeordnet ist. Die gemeinsamen Fixierungszonen können jeweils einen Punktbereich ausbilden, aber auch jeweils entlang einer Linie verlaufen. Bevorzugt ist es, wenn zwei gemeinsame Fixierungszonen sich in etwa gegenüberliegen. Dieses stabilisiert den Wabenkörper besonders. Außerdem bringt dieses fertigungstechnische Vorteile, da unter Umständen notwendige Herstellungsschritte für die Fixierungszonen in etwa der gleichen Höhe auf beiden seitlichen Randbereichen erfolgen. Die Anordnung der Fixierungszonen ist insbesondere auch so auswählbar, daß der Wabenkörper eine oder mehrere Vorzugsrichtungen aufweist, in denen er eine besondere Festigkeit ausbildet.

Eine gemeinsame Fixierungszone ist beispielsweise dadurch ausbildbar, daß sämtliche Blechlagen in dieser Zone aneinandergequetscht werden. Werden die Blechlagen gewickelt, so ist diese Wicklung im Bereich der Fixierungszone so ausgeführt, daß die Blechlagen eng zum Aneinanderliegen kommen. Aufgrund der zwischen ihnen herrschenden Reibung sind sie nicht mehr verrückbar. Die durch die Reibung behinderte Bewegbarkeit der Blechlagen ist durch eine dauerhafte Verbindung von zumindest Außenseiten mit benachbarten Innenseiten der Blechlagen miteinander verstärkbar oder auch ersetzbar. Dieses kann durch Löten, Schweißen, Verkleben oder andere Verbindungsmöglichkeiten erfolgen. Dazu gehören ebenfalls konstruktive Ausgestaltungen der Blechlagen, die dafür Sorge tragen, daß Außen- und Innenseiten einen Formschluß aufweisen. Dieses können Verschränkungen, Verzahnungen aber auch Kerbungen sowie entsprechende Faltungen der Blechlagen sein.

Ein Teil der Blechlagen ist strukturiert. Damit aber alle Blechlagen eine in dem seitlichen Randbereich angeordnete Fixierungszone ausbilden, müssen die Strukturierungen dort zumindest soweit abflachen, daß benachbarte Innenund Außenseiten zum Aneinanderliegen kommen. Eine derartige Abflachung wird dadurch unterstützt, daß im Bereich der Fixierungszone die Strukturierungen der strukturierten Blechlage zumindest kleiner sind als im übrigen abgeflachten Querschnittsbereich. Die Formgebung des abgeflachten Querschnittsbereiches ist auf diese Weise zumindest in einem gewissen Abschnitt regelmäßig gestaltbar und ein Übergang der Strukturierung ist dann auf den Bereich der Fixierungszone sowie dazu benachbarte Bereiche beschränkbar. Dieses erlaubt, den Wabenkörper mit Verzugsrichtungen bezüglich seines Elastizitätsverhaltens wie bezüglich seines Festigkeitsverhaltens auszubilden.

Als Strukturierung kommt insbesondere eine Wellung, Krümmung, Zackung oder Faltung eines Bleches in Frage. Dieses kann weiterhin auch Mikrostrukturen aufweisen sowie kleine Einschnitte und Öffnungen. Bezüglich der Strukturierung, der Art und Form der Lage wird vor allem auf die EP 0 484 364, die WO 93/20339, die EP 0 152 560 und das DE 296 11 143 verwiesen.

Auch wenn bei einem solchen Wabenkörper die Gefahr der Teleskopierung von einer oder mehreren Blechlagen gebannt ist, so weist der Wabenkörper in einer vorteilhaften Ausgestaltung trotzdem eine Flexibilität auf. Diese erlaubt es ihm, sich an seinen Einbauort anzupassen sowie auf Schwingungen, Erschütterungen und Stöße ohne Materialschäden zu reagieren. Dazu ist der Wabenkörper lagenweise so aufgebaut, daß zumindest ein Teil einer der Lagen flexibel ist. Bei einer Ausführungsform einer derartigen Lage aus einem strukturierten und einem nichtstrukturierten Blech wird die Flexibilität durch die Nachgiebigkeit der Strukturierung erzielt. Diese kann gewellt, gefaltet oder auch anders ausgeformt sein. Bei einer anderen Ausgestaltung wird die Flexibilität durch eine Beabstandung der die Blechlage ausbildenden Bleche erzielt. Wird der Wabenkörper zusammengedrückt, ist dieser zumindest solange elastisch verformbar, wie der Abstand zwischen den beiden Blechen dieser Blechlage noch nicht überwunden ist.

Eine andere Ausgestaltung des Wabenkörpers ist dergestalt, daß dieser so gewickelt, geschichtet, aus Blech und/oder zumindest zum Teil aus Keramik aufgebaut ist, daß der Wabenkörper auch unter Belastung seine Form behält. Dieses schließt eine gewisse Elastizität von zumindest einem Teil des Wabenkörpers mit ein. Bei einer Überbelastung des Wabenkörpers weist dieser in einer Weiterbildung vorbestimmte, sich plastisch verformende Gebiete auf. Diese sind dann in der Lage, eine Zerstörung des Wabenkörpers durch Aufnahme der Verformungsenergie zu verhindern. Die Standhaltigkeit der Form des Wabenkörpers ist nutzbar, indem dieser als tragendes Teil einer Konstruktion genutzt werden kann.

Aufgrund der Fixierungszonen ist nicht nur der Wabenkörper selbst besonders stabil, vielmehr ist diese Stabilität auch im Zusammenspiel mit anderen Bauteilen, die den Wabenkörper umgeben oder benachbart dazu sind, nutzbar. Neben der Stabilisierung durch die Fixierungszonen kann es daher vorteilhaft sein, wenn der Wabenkörper Mittel zur zusätzlichen positionellen Fixierung von zumindest einem Teil des Wabenkörpers aufweist. Diese sind in der Lage, auf oder im Wabenkörper auftretende Kräfte aufzunehmen und so die Verbindung der Blechlagen an der gemeinsamen Fixierungszone zu entlasten. In einer Weiterentwicklung sind diese Mittel auch in der Lage, dem Wabenkörper und benachbarten Bauteilen Stabilität zu bieten. Als Mittel sind beispielsweise nutzbar Verstrebungen, Verstärkungen, Stifte oder ähnliches, die im oder am Wabenkörper sich befinden.

Eine vorteilhafte Ausführungsform des Wabenkörpers ist so ausgestaltet, daß sein Lagenaufbau auch als Mittel zur zusätzlichen positionellen Fixierung genutzt wird. Die entsprechende Blechlage weist ein erstes Blech sowie ein zweites Blech auf, wobei das erste Blech dicker als das zweite Blech ist. Aus Elastizitätsgründen ist es besonders zweckmäßig, daß das dünnere, zweite Blech strukturiert ist, während das erste Blech auf dieser Struktur auf- bzw. anliegt. Soll dagegen der Stabilitätsgedanke im Vordergrund stehen, besitzt das erste Blech eine Struktur. Ist es notwendig, daß der Wabenkörper in verschiedenen Bereichen unterschiedliche Eigenschaften aufweisen muß, beispielsweise aufgrund seiner Einbauart, so ist der Aufbau einer Lage durch Wechsel von Strukturierung und Nichtstrukturierung eines Bleches änderbar bzw. es können auch beide Bleche strukturiert sein.

Bei einer weiteren, äußerst stabilen Ausgestaltung eines Wabenkörpers stützt sich zumindest eine der beiden Fixierungszonen an einer Verstärkung ab. Diese Verstärkung kann eine zusätzliche Blecheinlage, ein verstärktes Blech aber auch die Wand sein. Ebenso kann als Verstärkung ein Bauteil dienen, welches um den Wabenkörper angeordnet ist. Eine besondere Ausgestaltung entsprechend diesen Gedankens ist die Ausbildung eines Teiles des Wabenkörpers als eine Wand eines Schalldämpfers. Gleiches gilt aber auch für eine Wand eines Abgassystemes. Diese Wand des Abgassystemes und vor allem des Schalldämpfers kann zur Unterteilung des Gasstromes genauso wie aber auch zur Strömungsführung desselben dienen. Bekannt sind beispielsweise Krümmersysteme, die die einzelnen Leitungen vom Motorblock zusammenführen. Diese sind nun so ausgestaltbar, daß eine oder mehrere Wände dieses Systemes durch den Wabenkörper ausgebildet werden. Weiterhin sind auch Schalldämpfer bekannt, die durch Trennwände unterteilt sind. Diese Trennwände können ebenfalls Bestandteil eines Wabenkörpers sein. Die Wand, um die die Blechlagen angeordnet sind, bzw. die Bestandteil des Wabenkörpers ist, weist zweckmäßigerweise Mittel zur Positionierung der Blechlagen auf. Dieses können jedoch ebenso die um die Wand angeordneten Lagen aufweisen. Durch das Zusammenspiel Wand/Lage wird dann eine besondere Fixierung genauso wie eine erhöhte Stabilisierung erzielt. Als Mittel zur gegenseitigen Positionierung dienen Einkerbungen, Zähne oder Einschnürungen, die die Lage und/oder die Wand aufweisen und miteinander fixieren.

Der Wabenkörper mit abgeflachtem Querschnittsbereich und zumindest zwei gemeinsamen Fixierungszonen für alle Blechlagen, die jeweils an den seitlichen Randbereichen angeordnet sind, eignet sich auch dafür, daß der Wabenkörper selbst Bestandteil eines Teils eines Abgassystemes ist. Darunter ist zu verstehen, daß der Wabenkörper nicht mehr im Abgassystem eingebettet wird, sondern vielmehr einen Strömungsabschnitt ausbildet, vor und nach dem sich andere Strömungsabschnitte des Abgassystemes anschließen. Der Wabenkörper benötigt dazu nicht zwingenderweise ein Mantelrohr, welches um ihn herum liegt. Vielmehr bildet der Wabenkörper das Mantelrohr selbst aus. An diesem ist der Wabenkörper dann an die jeweiligen Strömungsabschnitte des Abgassystemes anschließbar.

Ein Anwendungsgebiet ist eine Katalysatoranordnung in einem Abgassystem eines Verbrennungsmotors, insbesondere eines Kleinmotors. Der Wabenkörper befindet sich dort in einem Raum des Abgassystemes. Eine besonders platzsparende Anordnung ergibt sich, wenn sich der Wabenkörper in einem Schalldämpfer des Abgassystemes befindet. Diese platzsparende Variante in Verbindung mit der Nichtteleskopierbarkeit des Wabenkörpers erlaubt auch eine genaue Aufeinanderabstimmung der Abmessungen zwischen einem Schalldämpfer eines Abgassystemes eines Verbrennungsmotores und einem erfindungsgemäßen Wabenkörper. Ein entsprechend ausgelegter Schalldämpfer weist daher Mittel auf, die zur Aufnahme eines solchen Wabenkörpers bestimmt sind. Entsprechend diesem Aspekt der Erfindung ist es beispielsweise aus Gründen der Handlichkeit des Einbaus des Schalldämpfers in das Abgassystem bevorzugt, daß der Wabenkörper in den Schalldämpfer integriert ist. Eine Vereinfachung einer Integrierung ergibt sich auch dadurch, daß der Schalldämpfer Mittel zur Fixierung des Wabenkörpers aufweist. Die Mittel zur Halterung desselben können dieses ebenfalls bewerkstelligen. Als Mittel zur Aufnahme, Integrierung und/oder Fixierung eignen sich Wände des Schalldämpfers genauso wie Vorsprünge im Schalldämpfer, aber auch Querstege oder entsprechend dem Wabenkörper geformte Bereiche.

Eine Weiterbildung eines derartigen Schalldämpfers sieht zumindest für einen Teil von diesem Mittel vor, die zum Eingriff in zumindest eine Lage des Wabenkörpers bestimmt sind. Diese dienen zur Fixierung, können aber auch eine stabilisierende Wirkung aufweisen. Als Mittel sind Zähne, Einkerbungen oder ähnliches oder auch Wölbungen nutzbar, wobei, bei Anordnung des Wabenkörpers zu einer Wand des Schalldämpfers, diese dann die entsprechenden Mittel aufweist. Da der Wabenkörper selbst einen Materialwert besitzt, der durch eine katalytische Beschichtung erhöht sein kann, ist der Schalldämpfer zweckmäßigerweise so konstruiert, daß der Wabenkörper austauschbar einsetzbar ist. Dieses bietet auch noch einen Vorteil in anderer Hinsicht. Hat der Wabenkörper einen Zustand erreicht, bei dem er als Katalysator eingesetzt, nicht mehr den gesetzlichen Vorschriften entsprechend arbeitet, ist der Austausch allein des Katalysators möglich. Das Abgassystem als solches muß dann nicht ebenfalls ausgetauscht werden. Auch in Hinsicht auf die Wieder- und Weiterverwertung von Gebrauchtwagen oder anderen Gebrauchsgütern erweist sich eine derartige konstruktive Abstimmung von Schalldämpfer und Wabenkörper als umweltfreundlich und zeitersparend.

Bei einer weiteren Ausführungsform eines Schalldämpfers mit einem vorher beschriebenen Wabenkörper übt ein Teil des Schalldämpfers eine Kraft, insbesondere eine Klemmkraft auf den Wabenkörper aus. Dieses kann durch die Mittel zur Halterung des Wabenkörpers sowie auch durch die Mittel zur Fixierung desselben erfolgen. Die Kraft verhindert, daß der Wabenkörper oder eine oder mehrere Blechlagen von ihm aus ihrer eingesetzten Position über längeren Betrieb des Schalldämpfers betrachtet, verrücken. Ein derartiger Effekt kann dadurch verstärkt werden, daß ein Teil des Wabenkörpers durch den Schalldämpfer gequetscht ist.

Weiterhin wird ein Verfahren zur Herstellung eines Wabenkörpers mit einer Oberseite, einer Unterseite, einer ersten und einer zweiten Stirnseite sowie zumindest einem ersten seitlichen Randbereich beschrieben, wobei der Wabenkörper einen abgeflachten Querschnittsbereich mit gewundenen Blechlagen aufweist, von denen zumindest ein Teil strukturiert ist. Das Verfahren hat die folgenden Schritte:
1. Ausbilden einer Lage,
2. Wickeln der Lage um sich selbst oder um eine Verstärkung, dabei
3. Ausbilden des seitlichen Randbereiches mit
4. Herstellen von einer ersten Fixierungszone entsprechend denjenigen des weiter oben beschriebenen Wabenkörpers.

Vor oder nach dem Wickeln wird die Lage mit einem katalytisch aktiven Material beschichtet, wodurch der hergestellte Wabenkörper selbst als Katalysator einsetzbar ist. Er findet dadurch Verwendung in Abgassystemen von Verbrennungskraftmaschinen, insbesondere Kleinmotoren. Andere Anwendungsgebiete, in denen ein Abgasstrom katalytisch behandelt werden muß, sind mit einem derartigen Wabenkörper aber auch befriedigbar. Um eine besondere Stabilität des Wabenkörpers zu erzielen, wird das Ausbilden des seitlichen Randbereiches mit einer Fixierungszone durch Verformen der Lage erreicht. Der Wabenkörper ist dann in einem kontinuierlichen Arbeitsprozeß herstellbar, ohne daß eine Unterbrechung desselben stattfinden muß. Zur Erhöhung der Stabilität, insbesondere der Formhaltigkeit des Wabenkörpers, wird im Herstellungsprozeß neben der ersten Fixierungszone im ersten seitlichen Randbereich eine zweite Fixierungszone in einem zweiten seitlichen Randbereich des Wabenkörpers angeordnet, die vorzugsweise nach der Herstellung in etwa einander gegenüberliegen.

Weitere vorteilhafte erfindungsgemäße Ausgestaltungen und Merkmale sind in den folgenden Beschreibungen der Zeichnung angegeben. Zweckmäßige Kombinationen der dort offenbarten Merkmale mit den bisher schon beschriebenen Merkmalen ergeben weitere vorteilhafte Ausführungsformen der Erfindung. Es zeigen:
- Fig. 1: einen Wabenkörper mit zwei ausgebildeten Fixierungszonen und ein entsprechendes Herstellungsverfahren,
- Fig. 2: einen weiteren Wabenkörper mit einem anderen Herstellungsverfahren,
- Fig. 3: verschiedene Anordnungen eines erfindungsgemäßen Wabenkörpers in einem Abgassystem,
- Fig. 4: ein weiteres Herstellungsverfahren für einen Wabenkörper,
- Fig. 5: einen weiteren Bearbeitungsschritt für ein Herstellungsverfahren entsprechend dem aus Fig. 4,
- Fig. 6: einen Wabenkörper mit einer integrierten Wand eines Schalldämpfers, angeordnet in demselben,
- Fig. 7: einen Schalldämpfer entsprechend der Fig. 6,
- Fig. 8: ein Herstellungsverfahren zur Integrierung einer Wand in einen Wabenkörper,
- Fig. 9: ein weiteres Herstellungsverfahren für einen Wabenkörper,
- Fig. 10: ein anderes Herstellungsverfahren für einen Wabenkörper,
- Fig. 11: wiederum ein anderes Herstellungsverfahren für einen Wabenkörper,
- Fig. 12: einen Wabenkörper mit einer Fixierungszone,
- Fig. 13: ein Schalldämpfergehäuse mit verschiedenen Anordnungsmöglichkeiten von Wabenkörpern,
- Fig. 14: ein weiteres Schalldämpfergehäuse,
- Fig. 15: ein als Schalldämpfergehäuse ausgebildetes Gehäuse und
- Fig. 16: einen Wabenkörper mit Außenverzahnung.

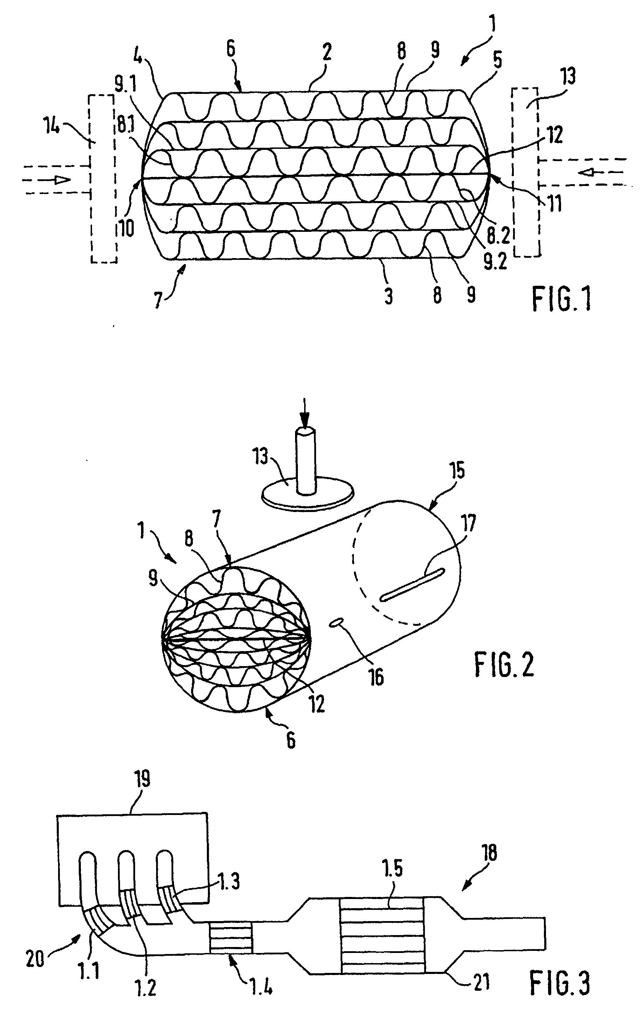

Fig. 1 zeigt einen Wabenkörper 1 mit einer Oberseite 2, einer Unterseite 3, einem ersten seitlichen Randbereich 4 und einem zweiten seitlichen Randbereich 5. Der Wabenkörper 1 in einer Ansicht von vorne mit seiner ersten Stirnseite 6 hat einen abgeflachten Querschnittsbereich und weist gewundene Blechlagen 7 auf. Die Blechlagen 7 sind aus einem strukturierten Blech 8 und einem unstrukturierten Blech 9 aufgebaut. Alle Blechlagen 7 haben gemeinsamen Fixierungszonen 10, 11, die in den seitlichen Randbereichen 4, 5 angeordnet sind. Die erste Fixierungszone 10 ist in etwa mittig des Wabenkörpers 1 angeordnet. Die zweite Fixierungszone 11 liegt der ersten Fixierungszone 10 gegenüber. Jeweils an der ersten Fixierungszone 10 und der zweiten Fixierungszone 11 liegen alle Bleche 8, 9 der Blechlagen 7 gemeinsam aneinander. Zwischen der ersten Fixierungszone 10 und der zweiten Fixierungszone 11 befindet sich ein dickes Blech 12. Dieses erstreckt sich zwischen beiden Fixierungszonen 10, 11 und dient als Basis des Wabenkörpers 1 bei seiner Herstellung. Beispielsweise kann auf dieses dicke Blech 12 ein erstes strukturiertes Blech 8.1 mit einem ersten unstrukturiertem Blech 9.1 an der ersten Fixierungszone 10 angesetzt und dann fortlaufend auf dem dicken Blech 12 angeordnet sein. An dem der ersten Fixierungszone 10 gegenüberliegenden Ende des dicken Bleches 12 werden das erste strukturierte Blech 8.1 und das erste unstrukturierte Blech 9.1 herumgeführt, so daß sie das zweite strukturierte Blech 8.2 und das zweite unstrukturierte Blech 9.2 ausbilden. Damit die zweite Fixierungszone 11 ausgebildet wird, werden die strukturierten Bleche 8 und unstrukturierten Bleche 9 so eng um das dicke Blech 12 geführt, daß alle Bleche 8, 9 der Blechlagen 7 unter Reibung aneinanderliegen. Mittels eines ersten Stempels 13 wird im Bereich der zweiten Fixierungszone 11 ein Andrücken der Blechlagen vorgenommen. Dieses Andrücken wiederholt sich auf der gegenüberliegenden Seite durch den zweiten Stempel 14. Auf diese Weise ist eine Formänderung der Strukturierung aber auch eine Unterstützung bei der Umwicklung des als Verstärkung wirkenden dicken Bleches 12 möglich. Bei einer etwas geänderten Herstellungsweise wird der langsam entstehende Wabenkörper 1 so um seine Längsachse gedreht, daß ein einziger Stempel 13 genügt, die Blechlagen 7 in den jeweiligen Fixierungszonen 10 und 11 anzudrücken.

Fig. 2 zeigt einen anderen Wabenkörper 1, wobei in dieser Ansicht deutlich dessen axiale Erstreckung sowie erste Stirnseite 6 deutlich und seine zweite Stirnseite 15 angedeutet zu erkennen sind. Der Wabenkörper 1 weist wiederum gewundene Blechlagen 7 auf, die aus strukturiertem Blech 8 und unstrukturiertem Blech 9 aufgebaut sind. In der Mitte des Wabenkörpers 1 ist eine Verstärkung 12 angeordnet, um die die Lagen 7 gewickelt sind. Die Wellung der strukturierten Bleche 8 ändert sich über dem Querschnitt, so daß insbesondere im Inneren des Wabenkörpers 1 ein äußerst abgeflachter Querschnittsbereich vorliegt, dessen Abflachung nach außen hin etwas abnimmt. Der Wabenkörper 1 weist weiterhin vier gemeinsame Fixierungszonen auf, von denen zwei aus der Ansicht hervorgehen. Die eine Fixierungszone 16 bildet einen Punktbereich aus, während die andere Fixierungszone 17 entlang einer Linie verläuft. Die Lage der beiden Fixierungszonen 16 und 17 ist natürlich vom Aufbau des Wabenkörpers 1 abhängig. Ändert sich dieser über dessen axiale Erstreckung, sind die Fixierungszonen 16 und 17 in den seitlichen Randbereichen entsprechend verschoben. Der dargestellte erste Stempel 13 ist auf zumindest zweifachem Wege nutzbar. Wird zum einen der sich ausbildende Wabenkörper bei der Herstellung gedreht, drückt der erste Stempel 13 die jeweilige Blechlage 7 an den seitlichen Randbereich so an, daß die gemeinsamen Fixierungszonen 16, 17 ausgebildet werden. Zum anderen ist der erste Stempel 13 auch in der Lage, den gesamten Wabenkörper 1 oder Teile davon so zu verformen, daß dieser einen abgeflachten Querschnittsbereich aufweist.

Fig. 3 zeigt verschiedene Anordnungsmöglichkeiten von Wabenkörpern in einem Abgassystem 18 eines Verbrennungsmotors 19. Beispielsweise sind drei Wabenkörper 1.1, 1.2 und 1.3 im Krümmerbereich 20 angeordnet. Dahinter befindet sich im zusammengeführten Strömungsbereich ein weiterer Wabenkörper 1.4. Angedeutet durch die konische Erweiterung und anschließende Verengung ist der Schalldämpfer 21. In diesem befindet sich ebenfalls ein Wabenkörper 1.5. Die Form der dargestellten Wabenkörper 1.1 bis 1.5 weist immer einen abgeflachten Querschnittsbereich auf. Der im Krümmerbereich 20 angeordnete erste Wabenkörper 1.1 beispielsweise erweitert sich außerdem konisch. Dieses gilt auch für den zweiten Wabenkörper 1.2, während der dritte Wabenkörper 1.3 im Krümmerbereich 20 zwar in etwa die gleiche Breite, dafür aber eine Krümmung aufweist.

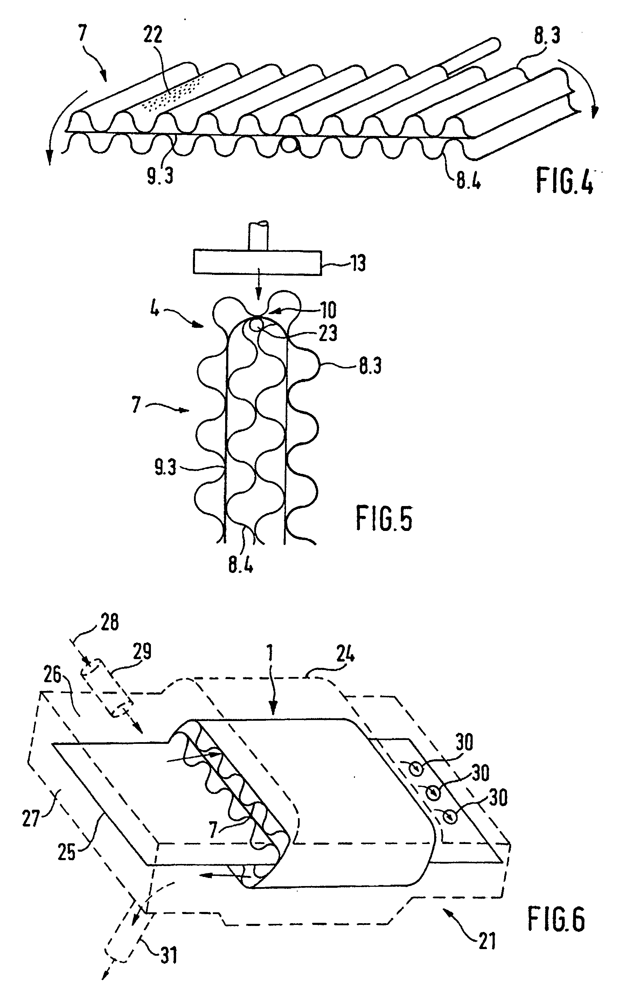

Fig. 4 verdeutlicht, wie ein Wabenkörper auch hergestellt werden kann. Eine Lage 7 mit einem ersten strukturierten Blech 8.3, einem zweiten strukturierten Blech 8.4 und einem unstrukturierten Blech 9.3 sind mit einer katalytischen Beschichtung 22 versehen. Die Bleche 8.3 und 9.3 bzw. 8.4 und 9.3 sind an ihren jeweils anliegenden Bereichen miteinander verbunden. Dieses erfolgt mittels Lötung, Punktschweißung oder ähnlichen Verbindungsverfahren. An einem Biegedorn 23 wird nun die Blechlage 7 entsprechend der Pfeile an ihren jeweiligen Enden gewunden und so in diesem Falle mehr oder minder hälftig zusammengeklappt.

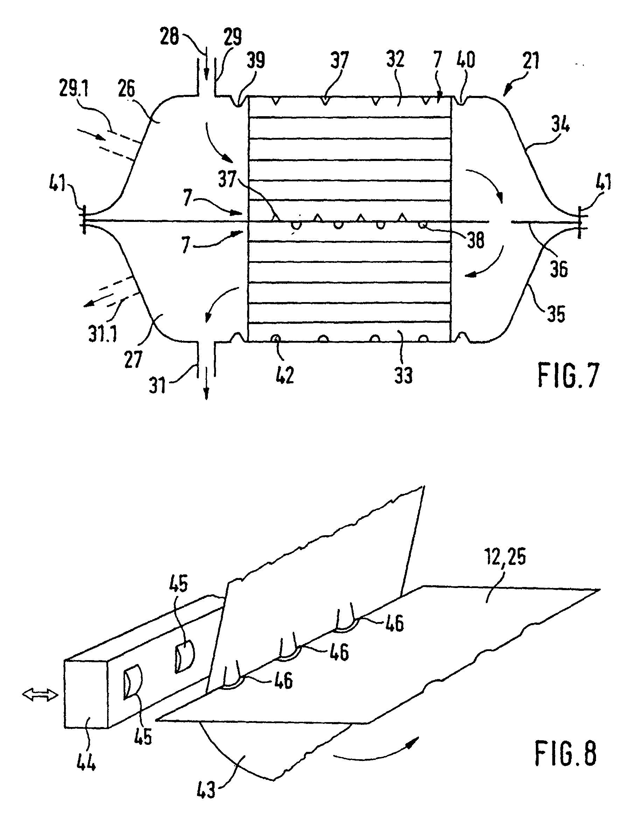

Fig. 5 zeigt, wie eine derart gewundene Blechlage 7 weiterbehandelt werden kann. Ein erster Stempel 13 verfährt auf den ersten seitlichen Randbereich 4 zu, biegt dabei das strukturierte Blech 8.3 so weit um, daß sich eine gemeinsame erste Fixierungszone 10 ergibt. Um den ersten Stempel 13 einen Widerpart bieten zu können, verbleibt der Biegedorn 23 beim Verfahren des ersten Stempels in der Blechlage 7. Durch Auswahl der Form des Biegedornes 23 ist die spätere Formgebung des seitlichen Randbereiches 4 möglich. Weiterhin geht aus der Fig. 5 hervor, daß je nach gewünschten Eigenschaften des Wabenkörpers das erste strukturierte Blech 8.3 gegenüber dem unstrukturierten Blech 9.3 eine andere Materialstärke aufweist und umgekehrt. Auf diese Weise ist das Elastizitätsverhalten des Wabenkörpers einstellbar. Auch kann die Strukturierung, hier die Wellung des nun innen liegenden zweiten strukturierten Bleches 8.4 so ausgebildet sein, daß ein Raum bzw. Abstand für ein elastisches Verhalten des Wabenkörpers sich ausbildet.

Fig. 6 zeigt die Anordnung eines Wabenkörpers 1, der von einem Schalldämpfergehäuse 24 umgeben ist, welches gestrichelt dargestellt ist. Der Wabenkörper 1 ist aus Blechlagen 7 wiederum aufgebaut. Im Wabenkörper 1 ist eine Wand 25 des Schalldämpfers 21 integriert, die den Schalldämpferraum in einen Oberraum 26 und Unterraum 27 unterteilt. In den Oberraum 26 wird ein Abgasstrom 28 über einen ersten Anschluß 29 zugeführt, durch die Anordnung der Wand 25 durch einen ersten Teil des Wabenkörpers 1 hindurch zu Öffnungen 30 in den Unterraum 27 geführt. Dort durchströmt der Abgasstrom 28 den anderen Teil des Wabenkörpers 1. Anschließend verläßt der Gasstrom 28 den Schalldämpfer durch einen zweiten Anschluß 31. Der Wabenkörper 1 mit seinem abgeflachten Querschnitt ist besonders an die Form des Schalldämpfergehäuses 24 angepaßt. Dieses weist insbesondere Mittel auf, durch die die Wand 25 so gehaltert wird, daß der mit dieser integrierte Wabenkörper 1 stabil fixiert ist.

Fig. 7 zeigt einen ersten Wabenkörper 32 und einen zweiten Wabenkörper 33 in einem Schalldämpfer 21. Durch den Schalldämpfer 21 wird wiederum ein Abgasstrom 28 geführt, der durch die Pfeile angedeutet ist. Der Schalldämpfer 21 weist eine Oberschale 34 und eine Unterschale 35 auf, zwischen denen die beiden Wabenkörper 32 und 33 angeordnet sind. Zwischen dem ersten Wabenkörper 32 und dem zweiten Wabenkörper 33 befindet sich eine Trennwand 36. Diese unterteilt den Schalldämpfer 21 in den Oberraum 26 sowie den Unterraum 27. Weiterhin weist die Trennwand 36 Zähne 37 bzw. Einkerbungen 38 auf, die mit einer Lage 7 des jeweiligen ersten Wabenkörpers 32 bzw. zweiten Wabenkörpers 33 zusammenspielt. Auf diese Weise werden beide Wabenkörper 32 und 33 zur Trennwand 36 fixiert. Weiterhin weist die Oberschale 34 eine erste Nut 39 und eine zweite Nut 40 auf. Auch diese dienen der Positionierung des ersten Wabenkörpers 32. Weiterhin besitzt auch die Oberschale 34 Zähne 37, die in eine Lage 7 des ersten Wabenkörpers 32 eingreifen. Durch Befestigungsmittel 41 sind die Oberschale 34, die Unterschale 35 sowie die Trennwand 36 miteinander verbunden. Diese Befestigungsmittel 41 sind lösbar, so daß die Wabenkörper 32 und 33 ausgetauscht werden können. Die Oberschale 34 sowie die Unterschale 35 sind weiterhin so ausbildbar, daß sie bei Zusammenfügen des Schalldämpfers 21 beispielsweise durch Anziehen der Befestigungsmittel 41 einen derartigen Druck auf den ersten bzw. zweiten Wabenkörper 32 bzw. 33 ausüben, daß die Zähne 37 oder Erhebungen 42 in diese eingreifen, diese klemmen und/oder auch zumindest Teile von Lagen 7 quetschen. Weiterhin sind gestrichelt versetzte Anschlüsse 29.1, 31.1 angedeutet, die gegenüber dem ersten 29 und zweiten 31 Anschluß strömungstechnische Vorteile haben.

Fig. 8 zeigt, wie eine Verstärkung 12 oder auch Wand 25 mit einem Blech 43 einer späteren Lage 7 verbindbar ist. Ein Stempel 44 mit Stempelmustern 45 verfährt auf die Verstärkung 12 zu und drückt das Blech 43 in entsprechende Einschnürungen 46. Die Einschnürungen 46 verhindern das Teleskopieren der späteren Blechlagen 7 und bilden auf diese Weise eine gemeinsame Fixierungszone des späteren Wabenkörpers aus. Zumindest in diesem Bereich sind auch die nachher übereinanderliegenden Bleche 43 miteinander durch Verlöten oder ähnlichem verbindbar.

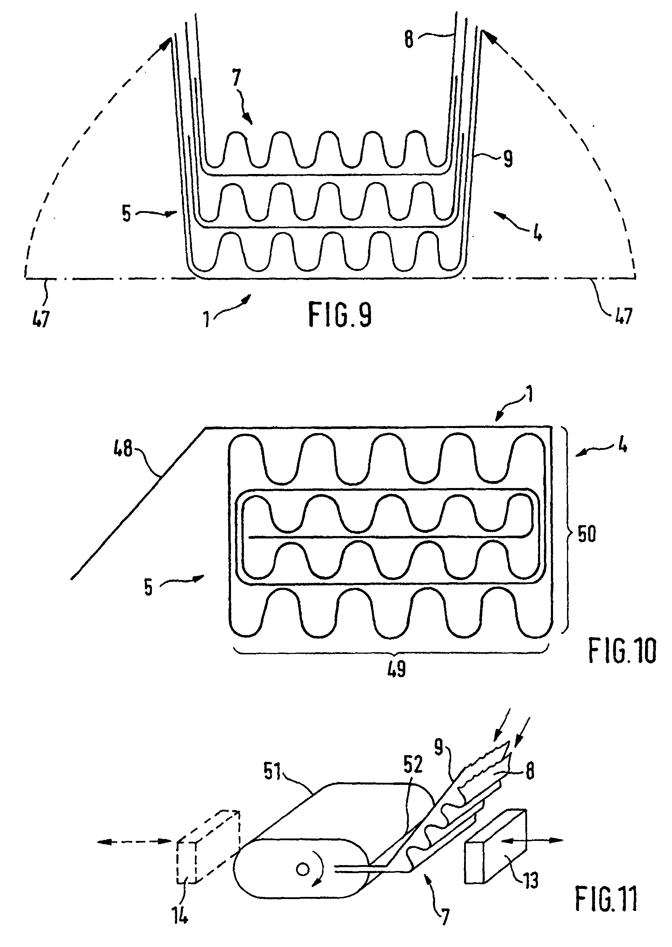

Figur 9 zeigt ein Herstellungsverfahren für einen weiteren Wabenkörper 1. Dieser Wabenkörper 1 entsteht dadurch, daß strukturierte Bleche 8 und unstrukturierte Bleche 9 ineinander gestapelt werden. Die über den eigentlichen späteren Wabenkörperkern herausragenden Enden 47 der strukturierten und unstrukturierten Bleche 8 und 9 werden entlang der Pfeilrichtung umgebogen, so daß ein erster 4 und ein zweiter 5 seitlicher Randbereich entsteht. In diesen sind dann die gemeinsamen Fixierungszonen durch geeignete Fixierungstechniken ausbildbar. Die überstehenden Enden 47 sind in einer Weiterbildung dieses Herstellungsverfahrens so lang, daß sie um die aus den strukturierten Blechen 8 und unstrukturierten Blechen 9 gebildeten Blechlagen 7 zu einem Mantel des Wabenkörpers 1 geformt werden können. Das Biegen der Enden 47 erfolgt dazu vorteilhafterweise nicht nur für ein Blech sondern für alle Bleche, unabhängig davon, ob es sich um strukturierte Bleche 8 oder unstrukturierte Bleche 9 handelt, gemeinsam in einem Arbeitsschritt. Ein vorteilhaftes Verfahren dafür ist, die strukturierten Bleche 8 und unstrukturierten Bleche 9 ohne Umklappen der Enden 47 zuerst einmal zu stapeln und erst anschließend diesen gesamten Stapel so zu drehen, daß die Enden 47 aller Blechlagen 7 umgewickelt werden. Dieses kann durch Drehung des Wabenkörpers 1 selbst oder auch durch von außen an den Enden 47 angreifenden Verformungseinrichtungen erfolgen.

Figur 10 zeigt ein anderes Herstellungsverfahren für einen Wabenkörper 1. Dieser wird durch Wicklung eines einzelnen Bleches 48 um sich selbst ausgebildet. Das einzelne Blech 48 weist strukturierte Bereiche 49 und unstrukturierte Bereiche 50 auf. Durch die Übereinanderlagerung von unstrukturierten Bereichen 50 sind an den so gebildeten seitlichen Randbereichen 4 und 5 die Möglichkeiten gegeben, dort Fixierungszonen auszubilden.

Figur 11 zeigt ebenfalls ein Herstellungsverfahren für einen Wabenkörper 1. Ähnlich wie in dem zur Figur 1 beschriebenen Verfahren werden ein erster Stempel 13 und ein zweiter Stempel 14 verfahren, um die Blechlage anpressen zu können. Anders jedoch als beim Wabenkörper in Figur 1 hat der hier entstehende Wabenkörper kein dickes Blech 12 zur Stabilisierung. Vielmehr wird in einen Drehkörper 51 ein strukturiertes Blech 8 und ein unstrukturiertes Blech 9 wie bei einem Sardinendosenöffner in einen Schlitz 52 des Drehkörpers 51 eingebracht. Bei Drehung des Drehkörpers 51 werden die beiden Bleche 8 und 9 als Lage aufgewickelt. Die Form des so entstehenden Wabenkörpers 1 ist von der Geometrie des Drehkörpers 51 abhängig. Der im Inneren des so entstehenden Wabenkörpers 1 sich bildende Hohlraum kann entsprechend den jeweiligen Anforderungen eher groß oder auch klein gehalten werden. In diesen Hohlraum kann weiterhin auch ein zusätzlicher Wabenkörper eingebracht werden. Der Drehkörper 51 wird in einer Weiterentwicklung des Verfahrens im Wabenkörper 1 belassen und dient aufgrund seiner Dicke als Stabilisierung und Aufnahme für den zusätzlich einbringbaren Wabenkörper.

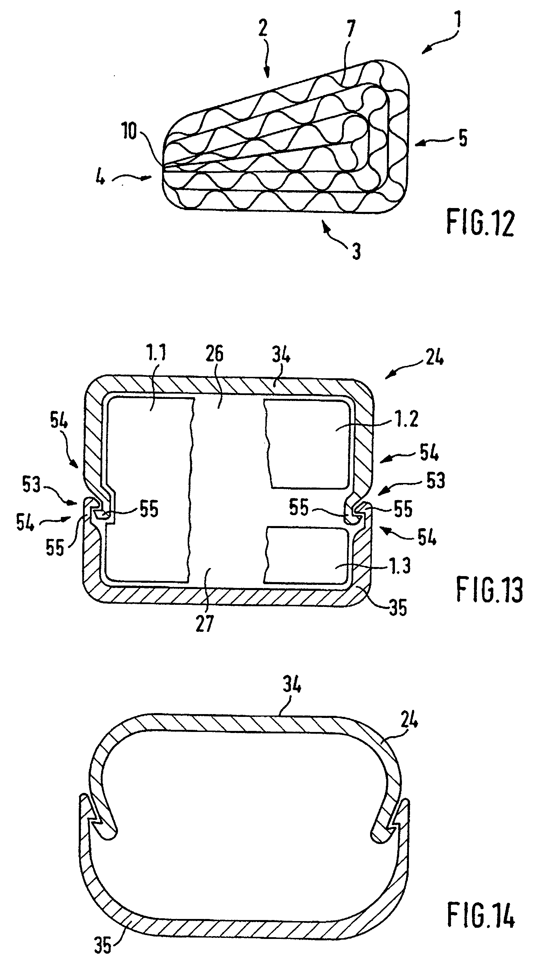

Figur 12 zeigt einen weiteren Wabenkörper 1. Dieser hat wiederum eine Oberseite 2, eine Unterseite 3, einen ersten seitlichen Randbereich 4 und einen zweiten seitlichen Randbereich 5. Der erste seitliche Randbereich 4 weist eine erste Fixierungszone 10 auf, mit der alle Blechlagen 7 des Wabenkörpers 1 miteinander verbunden sind. Auch hier hat der Wabenkörper einen abgeflachten Querschnitt, auch wenn die Längenverhältnisse zwischen dem ersten seitlichen Randbereich 4 und dem zweiten seitlichen Randbereich 5 unterschiedlich sind. Im übrigen gilt gleiches auch für die Oberseite 2 sowie die Unterseite 3. Auch können die Längenunterschiede zwischen den Randbereichen 4, 5 und der Oberseite 2 bzw. der Unterseite 3 so ausfallen, daß die seitlichen Randbereiche 4, 5 länger sind. Die Seiten selbst können dabei gerade, konkav, konvex oder auf sonstige Weise geformt sein. Auch können Wabenkörper entsprechend der Erfindung mehr als diese vier Seiten aufweisen, beispielsweise hexagonal oder anders polygonal aufgebaut sein.

Figur 13 zeigt die Anordnung von einem ersten 1.1, einem zweiten 1.2 und einem dritten 1.3 Wabenkörper, die entsprechend der Erfindung ausgebildet sind, in einem Schalldämpfergehäuse 24. Das Schalldämpfergehäuse 24 weist eine Oberschale 34 und eine Unterschale 35 auf. Die Oberschale 34 wird mit der Unterschale 35 über einen ineinander greifenden Verschließmechanismus 53 geschlossen und gehalten. Endbereiche 54 der Wände von Oberschale 34 und Unterschale 35 bilden jeweils eine Art Haken 55 mit aus. Diese Haken 55 sind so ausgestaltet, daß bei Aufdrücken der Oberschale 34 auf die Unterschale 35 die Endbereiche 54 der Oberschale 34 nach innen und die Endbereiche 54 der Unterschale 35 nach außen gedrückt werden. Dadurch können dann die so gegenüberliegenden Haken 55 ineinander haken. Die innere Formgebung des Schalldämpfergehäuses 24 ist für den oder die dort anzuordnenden Wabenkörper 1.1, 1.2 und 1.3 unterschiedlich nutzbar. Während der erste Wabenkörper 1.1, der geschnitten dargestellt ist, allein im Schalldämpfergehäuse 24 untergebracht wird, zeigt die Anordnung des zweiten 1.2 und dritten Wabenkörpers 1.3, wie die Körpergeometrie der Oberschale 34 und Unterschale 35 mit ihrer Hakenausbildung zur Halterung jeweils eines Wabenkörpers im Oberraum 26 bzw. Unterraum 27 genutzt wird. Beim ersten Wabenkörper 1.1 dagegen greift ein Teil des Verschließmechanismus 53 in den Wabenkörper 1.1 selbst ein und fixiert diesen so im Schalldämpfergehäuse 24.

Figur 14 zeigt ein weiteres Schalldämpfergehäuse 24 mit einer Oberschale 34 und einer Unterschale 35. Das Schalldämpfergehäuse 24 als solches ist wieder so ausgebildet, daß es den oder die in seinem Inneren anzuordnenden Wabenkörper, aufgrund seiner Form fixiert. Der Wabenkörper kann also nicht nur mehr oder minder viereckig sondern genauso auch konkav oder konvex sein. Weiterhin ist das Schalldämpfergehäuse auch so ausbildbar, daß ein Wabenkörper 1 vergleichbar dem in Figur 12 dargestellten ebenfalls in diesem anordbar ist. Bei der Konstruktion wird dabei berücksichtigt, wo die gemeinsame Fixierungszone oder die gemeinsamen Fixierungszonen sich befinden, da diese in der Lage sind, im Zusammenspiel mit dem Schalldämpfergehäuse 24 auch diesem eine Stabilität zu verleihen.

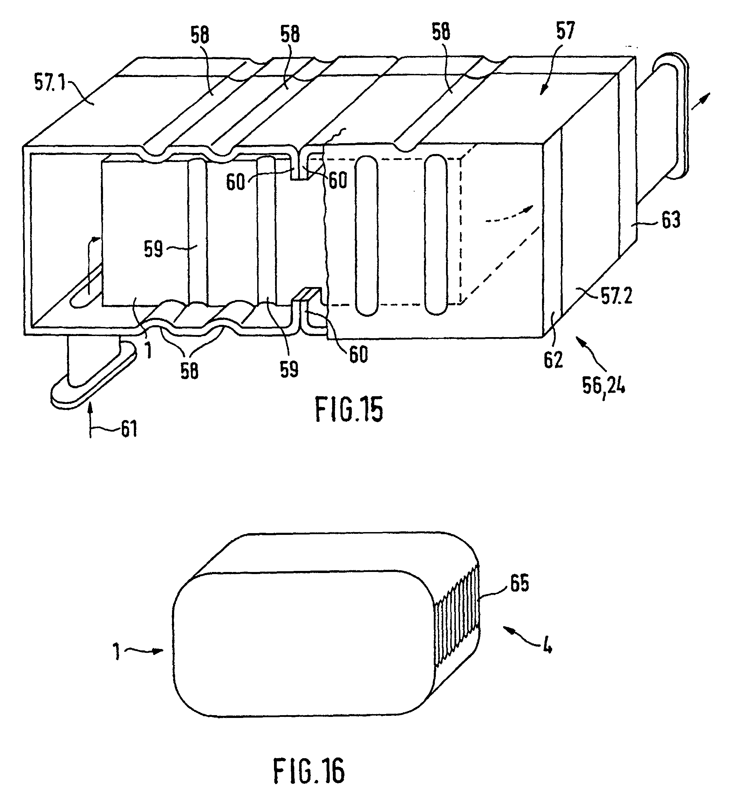

Figur 15 zeigt ein Gehäuse 56, daß als Schalldämpfergehäuse 24 einsetzbar ist. Dieses Schalldämpfergehäuse 24 hat einen Basiskörper 57, weist Einwellungen 58 auf, die so ausgebildet sind, daß sie in entsprechende Einsparungen 59 des im Inneren des Schalldämpfergehäuses 24 angeordneten Wabenkörpers 1 eingreifen und diesen somit fixieren. Der Basiskörper 57 besteht aus einem ersten Teil 57.1 und einem zweiten Teil 57.2, die jeweils ein umgekantetes Ende 60 aufweisen. Das umgekantete Ende 60 greift ebenfalls in den Wabenkörper 1 ein. Zur seitlichen Abdeckung und Verhinderung des Ausströmens des durch den Wabenkörper 1 durchströmenden Gasstromes 61 befinden sich auf dem Basiskörper 57 ein erster Deckel 62 und ein zweiter Deckel 63. Im ersten Deckel 62 befinden sich Einwölbungen 64, die in entsprechende Einsparungen 59 des Wabenkörpers 1 eingreifen. Dadurch erhält der Wabenkörper 1 eine seitliche Fixierung. Diese Verschlußart des Schalldämpfergehäuses 24 mittels seitlich anzubringender Deckel erlaubt es, den Wabenkörper durch Ein- und Ausschieben aus dem Basisgehäuse 57 austauschen zu können.

Figur 16 zeigt einen weiteren Wabenkörper 1, der an seinem ersten seitlichen Randbereich 4 eine Verzahnung 65 aufweist. Diese Verzahnung 65 wird vorteilhafterweise in denjenigen seitlichen Randbereich eingebracht, der auch eine Fixierungszone enthält. Dadurch wird beim Einschieben des Wabenkörpers 1, beispielsweise in ein Schalldämpfergehäuse, ein Wiederherausgleiten desselben verhindert. Dieses ist durch die Ausrichtung der Verzahnung 65 einstellbar. Im Zusammenspiel mit anderen Mitteln, die ein Verrutschen des Wabenkörpers im Schalldämpfergehäuse verhindern, bleibt dieser dauerhaft fixiert. Die Verzahnung 65 kann sich aber nicht nur an der Außenseite des Wabenkörpers 1 befinden. Auch Bleche des Wabenkörpers selbst können diese aufweisen, um so beispielsweise ein Ineinanderverhaken der Blechlagen untereinander zu erreichen.

### Bezugszeichenliste

- 1,1.1,1.2,1.3: Wabenkörper
- 2: Oberseite
- 3: Unterseite
- 4: erster seitlicher Randbereich
- 5: zweiter seitlicher Randbereich
- 6: erste Stirnseite
- 7: gewundene Blechlage
- 8,8.1,8.2,8.3,8.4: strukturiertes Blech
- 9,9.1,9.2,9.3,9.4: unstrukturiertes Blech
- 10: erste Fixierungszone
- 11: zweite Fixierungszone
- 12: dickes Blech, Verstärkung
- 13: erster Stempel
- 14: zweiter Stempel
- 15: zweite Stirnseite
- 16: Fixierungszone mit Punktbereich
- 17: Fixierungszone entlang einer Linie verlaufend
- 18: Abgassystem
- 19: Verbrennungsmotor
- 20: Krümmerbereich
- 21: Schalldämpfer
- 22: katalytische Beschichtung
- 23: Biegedorn
- 24: Schalldämpfergehäuse
- 25: Wand
- 26: Oberraum
- 27: Unterraum
- 28: Abgasstrom
- 29, 29.1: Anschluß
- 30, 31.1: Öffnung
- 31: weiterer Anschluß
- 32: erster Wabenkörper
- 33: zweiter Wabenkörper
- 34: Oberschale
- 35: Unterschale
- 36: Trennwand
- 37: Zahn
- 38: Einkerbung
- 39: erste Nut
- 40: zweite Nut
- 41: Befestigungsmittel
- 42: Erhebung
- 43: Blech
- 44: Stempel
- 45: Stempelmuster
- 46: Einschnürung
- 47: Enden
- 48: einzelnes Blech
- 49: strukturierter Bereich
- 50: unstrukturierter Bereich
- 51: Drehkörper
- 52: Schlitz
- 53: Verschließmechanismus
- 54: Endbereich
- 55: Haken
- 56: Gehäuse
- 57: Basiskörper
- 57.1: erster Teil des Basiskörpers
- 57.2: zweiter Teil des Basiskörpers
- 58: Einwellungen
- 59: Einsparung
- 60: umgekantetes Ende
- 61: Gasstrom
- 62: erster Deckel
- 63: zweiter Deckel
- 64: Einwölbung
- 65: Verzahnung

## Patentansprüche

1. Vorrichtung umfassend ein Gehäuse mit einer Oberschale (34) und einer Unterschale (35), die einen Hohlraum ausbilden, sowie einen Wabenkörper (1; 1.1, 1.2, 1.3, 1.4, 1.5; 32, 33) mit einer Oberseite (2), einer Unterseite (3), einer ersten (6) und einer zweiten (15) Stirnseite sowie einem ersten seitlichen Randbereich (4) und einem zweiten seitlichen Randbereich (5), wobei der Wabenkörper (1; 1.1, 1.2, 1.3, 1.4, 1.5; 32, 33) einen abgeflachten Querschnittsbereich und gewundene Blechlagen (7) aufweist, die vorzugsweise schon mit katalytisch aktivem Material (22) beschichtet sind, wobei von den Blechlagen zumindest ein Teil (8, 8.1, 8.2; 8.3, 8.4) strukturiert ist, und
alle Blechlagen eine erste gemeinsame Fixierungszone (10) haben, die in dem ersten seitlichen Randbereich (4) angeordnet ist **dadurch gekennzeichnet, daß** das Gehäuse eine Aufnahme für eine Wand (25) hat, die den Hohlraum in zwei Bereiche (26, 27) trennt, wobei der Wabenkörper so um die Wand (25) (1; 1.1, 1.2, 1.3, 1.4, 1.5; 32, 33) angeordnet ist, daß die wand (25) über die Stirnseiten (6, 15) hinausragt.

2. Vorrichtung nach Anspruch 1, **dadurch gekennzeichnet, daß** alle Blechlagen des wabenkörpers (1; 1.1, 1.2, 1.3, 1.4, 1.5, 32, 33) zumindest eine erste (10) und eine zweite (11) gemeinsame Fixierungszone haben, wobei die erste gemeinsame Fixierungszone (10) in dem ersten seitlichen Randbereich (4) und die zweite gemeinsame Fixierungszone (11) in dem zweiten Randbereich (5) angeordnet ist.

3. Vorrichtung nach Anspruch 1 oder 2, **dadurch gekennzeichnet, daß** alle Blechlagen des Wabenkörpers (1; 1.1, 1.2, 1.3, 1.4, 1.5; 32, 33) eine gemeinsame Fixierungszone (10, 11) haben, die einen Punktbereich (16) ausbildet.

4. Vorrichtung nach Anspruch 1, 2 oder 3, **dadurch gekennzeichnet, daß** alle Blechlagen des Wabenkörpers (1; 1.1, 1.2, 1.3, 1.4, 1.5; 32, 33) eine gemeinsame Fixierungszone (10, 11) haben, die jeweils entlang einer Linie (17) verläuft.

5. Vorrichtung nach einem der Ansprüche 2 bis 4, **dadurch gekennzeichnet, daß** sich die erste (10) und die zweite (11) gemeinsame Fixierungszone des Wabenkörpers (1, 1.1, 1.2, 1.3, 1.4, 1.5; 32, 33) in etwa gegenüberliegen.

6. Vorrichtung nach einem der vorhergehenden Ansprüche, **dadurch gekennzeichnet, daß** zumindest Außenseiten des Wabenkörpers (1, 1.1, 1.2, 1.3, 1.4, 1.5; 32, 33) mit benachbarten Innenseiten der Lagen (7) in der Fixierungszone (10, 11; 16, 17) dauerhaft miteinander verbunden sind.

7. Vorrichtung nach einem der vorhergehenden Ansprüche, **dadurch gekennzeichnet, daß** im Bereich der Fixierungszone (10, 11; 16, 17) des Wabenkörpers (1, 1.1, 1.2, 1.3, 1.4, 1.5; 32, 33) die Strukturierungen der strukturierten Blechlagen (8, 8.1, 8.2; 8.3, 8.4) zumindest kleiner sind als im übrigen abgeflachten Querschnittsbereich.

8. Vorrichtung nach einem der vorhergehenden Ansprüche, **dadurch gekennzeichnet, daß** der Wabenkörper (1; 1.1, 1.2, 1.3, 1.4, 1.5; 32, 33) so lagenweise aufgebaut ist, daß zumindest ein Teil einer Lage (7) flexibel ist.

9. Vorrichtung nach einem der vorhergehenden Ansprüche, **dadurch gekennzeichnet, daß** der Wabenkörper (1; 1.1, 1.2, 1.3, 1.4, 1.5; 32, 33) so gewickelt, geschichtet, aus Blech und/oder zumindest zum Teil aus Keramik aufgebaut ist, daß der Wabenkörper (1; 1.1, 1.2, 1.3, 1.4, 1.5; 32, 33) auch unter Belastung seine Form behält.

10. Vorrichtung nach einem der vorhergehenden Ansprüche, **dadurch gekennzeichnet, daß** der Wabenkörper (1; 1.1, 1.2, 1.3, 1.4, 1.5; 32, 33) Mittel (46) zur zusätzlichen positionellen Fixierung von zumindest einem Teil des Wabenkörpers (1; 1.1, 1.2, 1.3, 1.4, 1.5; 32, 33) aufweist.

11. Vorrichtung nach einem der vorhergehenden Ansprüche, **dadurch gekennzeichnet, daß** ein erstes Blech (9.3, 8.3) des Wabenkörpers (1, 1.1, 1.2, 1.3, 1.4, 1.5; 32, 33) zumindest teilweise mit einem zweiten (8.4, 9.3) Blech eine Lage (7) bildet, wobei das erste Blech (9.3, 8.3) dicker als das zweite Blech (8.4, 9.3) ist.

12. Vorrichtung nach einem der vorhergehenden Ansprüche, **dadurch gekennzeichnet, daß** die Fixierungszone (10, 11; 16, 17) sich an einer Verstärkung (12) abstützt.

13. Vorrichtung nach einem der vorhergehenden Ansprüche, **dadurch gekennzeichnet, daß** zumindest ein Teil des Wabenkörpers (1; 1.1, 1.2, 1.3, 1.4, 1.5; 32, 33) eine Wand (25) eines Schalldämpfers (18) ausbildet.

14. Vorrichtung nach einem der vorhergehenden Ansprüche, **dadurch gekennzeichnet, daß** die Lagen (7) des Wabenkörper (1; 1.1, 1.2, 1.3, 1.4, 1.5; 32, 33) zu einer Wand (34, 35, 36) eines Abgassystemes (18) zugeordnet sind.

15. Vorrichtung nach Anspruch 13 oder 14, **dadurch gekennzeichnet, daß** die Wand (25; 34, 35, 36) und/oder zumindest eine Lage (7) Mittel (37, 38, 39, 40) zur gegenseitigen Positionierung haben.

16. Vorrichtung nach Anspruch 13, 14 oder 15, **dadurch gekennzeichnet, daß** zumindest eine Lage (7) an Einkerbungen (38), Zähnen (37) oder Einschnürungen (39, 40) der Wand (37, 38, 39, 40) fixiert ist.

17. Vorrichtung nach einem der vorhergehenden Ansprüche, **dadurch gekennzeichnet, daß** der Wabenkörper (1; 1.1, 1.2, 1.3, 1.4, 1.5; 32, 33) Bestandteil eines Teiles eines Abgassystemes (18) ist.

18. Vorrichtung nach einem der vorhergehenden Ausprüche, **dadurch gekennzeichnet, daß** die vorrichtung ein Schalldämpfer (21) des Abgassystemes (18) eines Verbrennungsmotors (19) ist.

19. Vorrichtung nach Anspruch 18, **dadurch gekennzeichnet, daß** der Schalldämpfer (21) Mittel zur Aufnahme eines Wabenkörpers (1; 1.1, 1.2, 1.3, 1.4, 1.5; 32, 33) nach einem der Ansprüche 1 bis 17 aufweist.

20. Vorrichtung nach Anspruch 19, **dadurch gekennzeichnet, daß** in den Schalldämpfer (21) ein Wabenkörper (1; 1.1, 1.2, 1.3, 1.4, 1.5; 32, 33) integriert ist.

21. Vorrichtung nach Anspruch 18 oder 19, **dadurch gekennzeichnet, daß** der Schalldämpfer (21) Mittel (37, 38, 39, 40, 42) zur Fixierung des Wabenkörpers (1; 1.1, 1.2, 1.3, 1.4, 1.5; 32, 33) aufweist.

22. Vorrichtung nach einem des Ansprüche 18 bis 21, **dadurch gekennzeichnet, daß** ein Teil des Schalldämpfers (21) Mittel (37, 38, 42) aufweist, die zum Eingriff in zumindest eine Lage des Wabenkörpers (1; 1.1, 1.2, 1.3, 1.4, 1.5; 32, 33) nach einem der vorhergehenden Ansprüche bestimmt sind.

23. Vorrichtung nach Anspruch 22, **dadurch gekennzeichnet, daß** dieser Zähne (37), Einkerbungen (38) oder Wölbungen (42) aufweist, vorzugsweise an einer Wand (34, 35, 36), an die der Wabenkörper (1; 1.1. 1.2, 1.3, 1.4, 1.5; 32, 33) anordbar ist.

24. Vorrichtung nach einem der Ansprüche 18 bis 23, **dadurch gekennzeichnet, daß** der Wabenkörper (1; 1.1, 1.2, 1.3, 1.4, 1.5; 32, 33) austauschbar einsetzbar ist.

25. Vorrichtung nach einem der Ansprüche 18 bis 24, **dadurch gekennzeichnet, daß** ein Teil des Schalldämpfers (21) eine Kraft, insbesondere eine Klemmkraft, auf den Wabenkörper (1; 1.1, 1.2, 1.3, 1.4, 1.5; 32, 33) ausübt.

26. Vorrichtung nach einem der Ansprüche 18 bis 25, **dadurch gekennzeichnet, daß** ein Teil des Wabenkörpers (1; 1.1, 1.2, 1.3, 1.4, 1.5; 32, 33) durch den Schalldämpfer (21) gequetscht ist.

## Claims

1. An apparatus comprising a housing having a top shell portion (34) and a bottom shell portion (35) which form a cavity, as well as a honeycomb body (1; 1.1, 1.2, 1.3, 1.4, 1.5; 32, 33) having a top side (2), a bottom side (3), a first end face (6) and a second end face (15) as well as a first lateral edge region (4) and a second lateral edge region (5) wherein the honeycomb body (1; 1.1, 1.2, 1.3, 1.4, 1.5; 32, 33) has a flattened cross-sectional region and wound sheet layers (7) which are preferably already coated with catalytically active material (22), wherein at least a portion (8, 8.1, 8.2; 8.3, 8.4) of the sheet layers is structured, and all sheet layers have a first common fixing zone (10) which is arranged in the first lateral edge region (4), **characterized in that** the housing has a receiving means for a wall (25) which divides the cavity into two regions (26, 27), wherein the honeycomb body (1; 1.1, 1.2, 1.3, 1.4, 1.5; 32, 33) is arranged around the wall (25) in such a way, that the wall (25) is projecting over the end faces (6, 15).

2. Apparatus according to claim 1, **characterised in that** all sheet layers of the honeycomb body (1; 1.1, 1.2, 1.3, 1.4, 1.5; 32, 33) have at least a first common fixing zone (10) and a second common fixing zone (11), wherein the first common fixing zone (10) is arranged in the first lateral edge region (4) and the second common fixing zone (11) is arranged in the second edge region (5).

3. Apparatus according to claim 1 or claim 2, **characterised in that** all sheet layers of the honeycomb body (1; 1.1, 1.2, 1.3, 1.4, 1.5; 32, 33) have a common fixing zone (10, 11) which forms a spot region (16).

4. Apparatus according to claim 1, 2 or 3, **characterised in that** all sheet layers of the honeycomb body (1; 1.1, 1.2, 1.3, 1.4, 1.5; 32, 33) have a common fixing zone (10, 11) which extends along a line (17).

5. Apparatus according to one of claims 2 to 4, **characterised in that** the first common fixing zone (10) and the second common fixing zone (11) of the honeycomb body (1; 1.1, 1.2, 1.3, 1.4, 1.5; 32, 33) are approximately mutually facing each other.

6. Apparatus according to one of the preceding claims, **characterised in that** at least outward sides of the honeycomb body (1; 1.1, 1.2, 1.3, 1.4, 1.5; 32, 33) are durably connected to adjacent inward sides of the layers (7) in the fixing zone (10, 11; 16, 17).

7. Apparatus according to one of the preceding claims, **characterised in that** in the region of the fixing zone (10, 11; 16, 17) of the honeycomb body (1; 1.1, 1.2, 1.3, 1.4, 1.5; 32, 33) the structurings of the structured sheet layers (8, 8.1, 8.2; 8.3, 8.4) are at least smaller than in the rest of the flattened cross-sectional region.

8. Apparatus according to one of the preceding claims, **characterised in that** the honeycomb body (1; 1.1, 1.2, 1.3, 1.4, 1.5; 32, 33) is of such a layer-wise construction that at least a portion of a layer (7) is flexible.

9. Apparatus according to one of the preceding claims, **characterised in that** the honeycomb body (1; 1.1, 1.2, 1.3, 1.4, 1.5; 32, 33) is so wound, arranged in layered relationship, constructed from sheet metal and/or constructed at least in part from ceramic, that the honeycomb body (1; 1.1, 1.2, 1.3, 1.4, 1.5; 32, 33) retains its shape even under load.

10. Apparatus according to one of the preceding claims, **characterised in that** the honeycomb body (1; 1.1, 1.2, 1.3, 1.4, 1.5; 32, 33) has means (46) for additional positional fixing of at least a portion of the honeycomb body (1; 1.1, 1.2, 1.3, ,1.4, 1.5; 32, 33).

11. Apparatus according to one of the preceding claims, **characterised in that** a first sheet metal (9.3, 8.3) of the honeycomb body (1; 1.1, 1.2, 1.3, 1.4, 1.5; 32, 33)forms at least partially with a second sheet metal (8.4, 9.3) a layer (7), the first sheet metal (9.3, 8.3) being thicker than the second sheet metal (8.4, 9.3).

12. Apparatus according to one of the preceding claims, **characterised in that** the fixing zone (10, 11; 16, 17) is supported against a reinforcement (12).

13. Apparatus according to one of the preceding claims, **characterised in that** at least a part of the honeycomb body (1; 1.1, 1.2, 1.3, 1.4, 1.5; 32, 33) provides a wall (25) of a silencer (18).

14. Apparatus according to one of the preceding claims, **characterised in that** the layers (7) of the honeycomb body (1; 1.1, 1.2, 1.3, 1.4, 1.5; 32, 33) are associated with a wall (34, 35, 36) of an exhaust gas system (18).

15. Apparatus according to claim 13 or 14, **characterised in that** the wall (25; 34, 35, 36) and/or at least one layer (7) have means (37, 38, 39, 40) for mutual positioning.

16. Apparatus according to claim 13, 14 or 15, **characterised in that** at least one layer (7) is fixed at notches (38), teeth (37) or recesses (39, 40) of the wall (37, 38, 39, 40).

17. Apparatus according to one of the preceding claims, **characterised in that** the honeycomb body (1; 1.1, 1.2, 1.3, 1.4, 1.5; 32, 33) is a component of a portion of an exhaust gas system (18).

18. Apparatus according to one of the preceding claims, **characterised in that** the apparatus is a silencer (21) of the exhaust gas system (18) of an internal combustion engine (19).

19. Apparatus according to claim 18, **characterised in that** the silencer (21) has means for accommodating a honeycomb body (1; 1.1, 1.2, 1.3, 1.4, 1.5; 32, 33) according to one of claims 1 to 17.

20. Apparatus according to claim 19, **characterised in that** a honeycomb body (1; 1.1, 1.2, 1.3, 1.4, 1.5; 32, 33) is integrated into the silencer (21).

21. Apparatus according to claim 18 or 19, **characterised in that** the silencer (21) has means (37, 38, 39, 40, 42) for fixing the honeycomb body (1; 1.1, 1.2, 1.3, 1.4, 1.5; 32, 33).

22. Apparatus according to one of the claims 18 to 21, **characterised in that** a part of the silencer (21) has means (37, 38, 42) which are intended for engagement into at least one layer of the honeycomb body (1; 1.1, 1.2, 1.3, 1.4, 1.5; 32, 33) according to one of the preceding claims.

23. Apparatus according to claim 22, **characterised in that** it has teeth (37), recesses (38) or curvature (42), preferably at a wall (34, 35, 36) at which the honeycomb body (1; 1.1, 1.2, 1.3, 1.4, 1.5; 32, 33) can be arranged.

24. Apparatus according to one of the claims 18 to 23, **characterised in that** the honeycomb body (1; 1.1, 1.2, 1.3, 1.4, *1.5;* 32, 33) can be replaceably inserted.

25. Apparatus according to one of the claims 18 to 24, **characterised in that** a part of the silencer (21) applies a force, in particular a clamping force, to the honeycomb body (1; 1.1, 1.2, 1.3, 1.4, 1.5; 32, 33).

26. Apparatus according to one of the claims 18 to 25, **characterised in that** a portion of the honeycomb body (1; 1.1, 1.2, 1.3, 1.4, 1.5; 32, 33) is squeezed by the silencer (21).

## Revendications

1. Dispositif comprenant un boîtier avec une coquille supérieure (34) et une coquille inférieure (35), qui forment une cavité, ainsi qu'un corps en nids d'abeilles (1 ; 1.1, 1.2, 1.3, 1.4, 1.5 ; 32, 33) avec une face supérieure (2) et une face inférieure (3), une première (6) et une deuxième (15) face frontale ainsi qu'avec une première zone latérale de bord (4) et une deuxième zone latérale de bord (5), dans quel cas le corps en nids d'abeilles (1 ; 1.1, 1.2, 1.3, 1.4, 1.5 ; 32, 33) présente une zone de section transversale aplatie et des couches de tôles incurvées (7), qui de préférence sont déjà revêtues de matériau à activité catalytique (22), dans quel cas au moins une partie (8, 8.1, 8.2 ; 8.3, 8.4) des couches de tôles est structurée et toutes les couches de tôles ont une première zone de fixation commune (10), qui est agencée dans la première zone latérale de bord (4), **caractérisé en ce que** le boîtier a un logement pour une paroi (25) qui sépare la cavité en deux zones (26, 27), le corps en nids d'abeilles (1 ; 1.1, 1.2, 1.3, 1.4, 1.5 ; 32, 33) étant agencé de telle façon autour de la paroi (25) que la paroi (25) dépasse les faces frontales (6, 15).

2. Dispositif selon la revendication 1, **caractérisé en ce que** toutes les couches de tôles du corps en nids d'abeilles (1 ; 1.1, 1.2, 1.3, 1.4, 1.5 ; 32, 33) ont au moins une première (10) et une deuxième (11) zone de fixation commune, la première zone de fixation commune (10) étant agencée dans la première zone latérale de bord (4) et la deuxième zone de fixation commune (11) étant agencée dans la deuxième zone latérale de bord (5).

3. Dispositif selon la revendication 1 ou 2, **caractérisé en ce que** toutes les couches de tôles du corps en nids d'abeilles (1 ; 1.1, 1.2, 1.3, 1.4, 1.5 ; 32, 33) ont une zone de fixation commune (10, 11) qui forme une zone de spot (16).

4. Dispositif selon la revendication 1, 2 ou 3, **caractérisé en ce que** toutes les couches de tôles du corps en nids d'abeilles (1 ; 1.1, 1.2, 1.3, 1.4, 1.5 ; 32, 33) ont une zone de fixation commune (10, 11) qui s'étend respectivement le long d'une ligne (17).

5. Dispositif selon l'une des revendications 2 à 4, **caractérisé en ce que** la première (10) et le deuxième (11) zone de fixation commune du corps en nids d'abeilles (1 ; 1.1, 1.2, 1.3, 1.4, 1.5; 32, 33) sont situées approximativement vis-à-vis.

6. Dispositif selon l'une des revendications précédentes, **caractérisé en ce qu'**au moins des faces extérieures du corps en nids d'abeilles (1 ; 1.1, 1.2, 1.3, 1.4, 1.5 ; 32, 33) sont fixées durablement les unes aux autres aux faces intérieures adjacentes des couches (7) dans la zone de fixation (10, 11 ; 16, 17).

7. Dispositif selon l'une des revendications précédentes, **caractérisé en ce que** dans la zone de la zone de fixation (10, 11 ; 16, 17) du corps en nids d'abeilles (1 ; 1.1, 1.2, 1.3, 1.4, 1.5 ; 32, 33) les structurations des couches de tôles structurées (8, 8.1, 8.2 ;8.3, 8.4) sont au moins plus faibles que dans le reste de la zone de section transversale aplatie.

8. Dispositif selon l'une des revendications précédentes, **caractérisé en ce que** le corps en nids d'abeilles (1 ; 1.1, 1.2, 1.3, 1.4, 1.5 ; 32, 33) est construit de telle manière à la façon de couches qu'au moins une partie d'une couche (7) est flexible.

9. Dispositif selon l'une des revendications précédentes, **caractérisé en ce que** le corps en nids d'abeilles (1 ; 1.1, 1.2, 1.3, 1.4, 1.5 ; 32, 33) est enroulé, stratifié, construit de tôle et/ou au moins en partie de céramique de telle manière que le corps en nids d'abeilles (1 ; 1.1, 1.2, 1.3, 1.4, 1.5 ; 32, 33) garde même sous contrainte sa forme.

10. Dispositif selon l'une des revendications précédentes, **caractérisé en ce que** le corps en nids d'abeilles (1 ; 1.1, 1.2, 1.3, 1.4, 1.5 ; 32, 33) présente des moyens (46) destinés à la fixation positionnelle additionnelle d'au moins une partie du corps en nids d'abeilles (1 ; 1.1, 1.2, 1.3, 1.4, 1.5 ; 32, 33).

11. Dispositif selon l'une des revendications précédentes, **caractérisé en ce que** qu'une première tôle (9.3, 8.3) du corps en nids d'abeilles (1 ; 1.1, 1.2, 1.3, 1.4, 1.5 ; 32, 33) forme au moins partiellement une couche (7) avec une deuxième (8.4, 9.3) tôle, la première tôle (9.3, 8.3) étant plus épaisse que la deuxième tôle (8.4, 9.3).

12. Dispositif selon l'une des revendications précédentes, **caractérisé en ce que** la zone de fixation (10, 11 ; 16, 17) s'appuie sur un moyen de renforcement (12).

13. Dispositif selon l'une des revendications précédentes, **caractérisé en ce qu'**au moins une partie du corps en nids d'abeilles (1 ; 1.1, 1.2, 1.3, 1.4, 1.5 ; 32, 33) forme une paroi (25) d'un pot d'échappement (18).

14. Dispositif selon l'une des revendications précédentes, **caractérisé en ce que** les couches (7) du corps en nids d'abeilles (1 ; 1.1, 1.2, 1.3, 1.4, 1.5 ; 32, 33) sont associées à une paroi (34, 35, 36) d'un système de gaz d'échappement (18).

15. Dispositif selon la revendication 13 ou 14, **caractérisé en ce que** la paroi (25 ; 34, 35, 36) et/ou au moins une couche (7) ont des moyens (37, 38, 39, 40) pour le positionnement mutuel.

16. Dispositif selon la revendication 13, 14 ou 15, **caractérisé en ce qu'**au moins une couche (7) est fixée sur des encoches (38), des dents (37) ou des gorges (39, 40) de la paroi (37, 38, 39, 40).

17. Dispositif selon l'une des revendications précédentes, **caractérisé en ce que** le corps en nids d'abeilles (1 ; 1.1, 1.2, 1.3, 1.4, 1.5; 32, 33) est le constituant d'une partie du système de gaz d'échappement (18).

18. Dispositif selon l'une des revendications précédentes, **caractérisé en ce que** le dispositif est un pot d'échappement (21) du système de gaz d'échappement (18) d'un moteur à combustion interne (19).

19. Dispositif selon la revendication 18, **caractérisé en ce que** le pot d'échappement (21) a des moyens pour recevoir le corps en nids d'abeilles (1 ; 1.1, 1.2, 1.3, 1.4, 1.5; 32, 33) selon l'une des revendications 1 à 17.

20. Dispositif selon la revendication 19, **caractérisé en ce qu'**un corps en nids d'abeilles (1 ; 1.1, 1.2, 1.3, 1.4, 1.5 ; 32, 33) est intégré dans le pot d'échappement (21).

21. Dispositif selon la revendication 18 ou 19, **caractérisé en ce que** le pot d'échappement (21) a des moyens (37, 38, 39, 40,42) pour la fixation du corps en nids d'abeilles (1 ; 1.1, 1.2, 1.3, 1.4, 1.5 ; 32, 33).

22. Dispositif selon l'une des revendications 18 à 21, **caractérisé en ce qu'**une partie du pot d'échappement (21) a des moyens (37, 38, 42) qui sont destinés à la prise dans au moins une couche du corps en nids d'abeilles (1 ; 1.1, 1.2, 1.3, 1.4, 1.5 ; 32, 33) selon l'une des revendications précédentes.

23. Dispositif selon la revendication 22, **caractérisé en ce que** celui-ci présente des dents (37), des encoches (38) ou des bombements (42), de préférence sur une paroi (34, 35, 36) sur laquelle le corps en nids d'abeilles (1 ; 1.1, 1.2, 1.3, 1.4, 1.5 ; 32, 33) peut être agencé.

24. Dispositif selon l'une des revendications 18 à 23, **caractérisé en ce que** le corps en nids d'abeilles (1 ; 1.1, 1.2, 1.3, 1.4, 1.5; 32, 33) peut être introduit de façon échangeable.

25. Dispositif selon l'une des revendications 18 à 24, **caractérisé en ce qu'**une partie du pot d'échappement (21) exerce une force, notamment une force de serrage, sur le corps en nids d'abeilles (1 ; 1.1, 1.2, 1.3, 1.4, 1.5 ; 32, 33).

26. Dispositif selon l'une des revendications 18 à 25, **caractérisé en ce qu'**une partie du corps en nids d'abeilles (1 ; 1.1, 1.2, 1.3, 1.4, 1.5 ; 32, 33) est pressé par le pot d'échappement (21).
